Europäisches Patentamt

European Patent Office

Office européen des brevets

(11) Veröffentlichungsnummer : **0 073 740**
**B1**

# EUROPÄISCHE PATENTSCHRIFT

(45) Veröffentlichungstag der Patentschrift :
26.06.85

(51) Int. Cl.⁴ : **H 04 Q   1/14**

(21) Anmeldenummer : 82810352.3

(22) Anmeldetag : 24.08.82

(54) Anschlussvorrichtung zum Verbinden elektrisch isolierter Leitungsadern.

(30) Priorität : 27.08.81 CH 5525/81

(43) Veröffentlichungstag der Anmeldung :
09.03.83 Patentblatt 83/10

(45) Bekanntmachung des Hinweises auf die Patenterteilung : 26.06.85 Patentblatt 85/26

(84) Benannte Vertragsstaaten :
DE GB

(56) Entgegenhaltungen :
DE-A- 2 048 104
DE-A- 2 848 481
DE-B- 1 640 644
DE-B- 2 643 186
US-A- 3 760 328
SIEMENS-ZEITSCHRIFT, Band 48, Nr. 4, April 1974,
Seiten 224-227, Erlangen, DE.
TELEFON REPORT, Band 12, Nr. 1, September 1976,
Seiten 41-46, München, DE.
TELEFON REPORT, Band 9, Nr. 4, September 1973,
Seiten 139-149, München, DE.

(73) Patentinhaber : **Generaldirektion PTT**
**Viktoriastrasse 21**
**CH-3000 Bern 30 (CH)**

(72) Erfinder : **Stieger, Hans**
**Bantigerstrasse 23A**
**CH-3052 Zollikofen (CH)**

(74) Vertreter : **Schweizer, Hans et al**
**Bovard AG Patentanwälte VSP Optingenstrasse 16**
**CH-3000 Bern 25 (CH)**

**Beschreibung**

Die Erfindung betrifft eine Anschlussvorrichtung gemäss dem Oberbegriff des Patentanspruches 1.

Zum wahlweisen Verbinden, beispielsweise der Adern von Teilnehmerkabeln mit Adern von Installationskabeln im Fernmeldebereich, wurden schon seit langem sog. Verteiler eingesetzt, wobei die einzelnen Adern auf Lötfahnen von Verteilschienen aufgelötet und mittels ebenfalls aufgelöteten Ueberführungsdrähten elektrisch miteinander verbunden wurden. Es sind schon anstelle der Lötverbindungen sog. Wickelverbindungen vorgeschlagen worden, wobei die abisolierten Adern um Wicklungsstifte gewickelt worden sind. Zum Reduzieren der Arbeitszeit beim Verbinden von elektrisch isolierten Leitungsadern sind schon Anschlussvorrichtungen bekannt geworden und beispielsweise in der CH-PS Nr. 546 012 beschrieben. Diese bekannte Anschlussvorrichtung weist eine Anzahl auf einer Grundplatte angeordneter Kammleisten auf, die mit Nuten zur Aufnahme von Kabeladern versehen sind. Jeder Kontaktleiste ist ein aufsetzbarer Verbinderblock mit einer Anzahl gestreckter Verbindungsglieder zur Herstellung der elektrischen Verbindung zwischen zwei Leitungsadern zugeordnet. An beiden Enden des Verbindungsgliedes ist ein Schlitz zum Durchtrennen der Aderisolation und zum Herstellen des elektrischen Kontaktes zwischen zwei Leitungsadern vorgesehen. Mit derartigen bekannten Anschlussvorrichtungen können eine grosse Anzahl von Leitungsadern, d. h. je zwei davon, elektrisch einwandfrei in kurzer Zeit miteinander verbunden werden.

Weiter ist in der DE-B-2 643 186 ein Verteilerelement für Fernmeldevermittlungsanlagen beschrieben, das Anschlusselemente für ankommende und Anschlusselemente für abgehende Leitungen aufweist. Zwischen den genannten Anschlusselementen sind Schalt- und Trennkontakte angeordnet, die von mit den Anschlusselementen verbundenen Kontaktfedern gebildet sind. Zwischen die paarweise angeordneten aufeinander zu gebogenen Kontaktfedern sind Trenn- oder Schaltstecker einsteckbar und mit einem elektrischen Bauteil steckverbindbar. Das Bauteil ist als Kabelstecker ausgebildet, an den Schaltdrähte zur Herstellung einer zusätzlichen externen Verbindung angeschlossen sind. Dieses bekannte Verteilerelement ermöglicht das Ausschalten von externen Verbindungen zusätzlich zu denen, die über die Trenn- oder Schaltstecker hergestellt werden können. Ein Nachteil dieses bekannten Verbindungselementes ist, dass das als Kabelstecker ausgebildete Bauteil nur von der Rückseite her einsetzbar ist, wodurch die Verwendbarkeit dieses Verbindungselementes eingeschränkt ist.

Es ist Aufgabe der Erfindung, eine Anschlussvorrichtung der eingangs genannten Art zu schaffen, welche die Möglichkeit bietet, mit Hilfe eines Prüf- oder Messsteckers Zutritt von der Frontseite her zu den miteinander verbundenen Leitungsadern zu gestatten, und die umfangreiche Umschaltungen wesentlich erleichtert.

Die erfindungsgemässe Anschlussvorrichtung ist durch die im kennzeichnenden Teil des Patentanspruches 1 angeführten Merkmale gekennzeichnet.

Weitere Ausbildungen der erfindungsgemässen Anschlussvorrichtung sind in den abhängigen Ansprüchen angegeben.

Der Erfindungsgegenstand ist mit Bezugnahme auf die Zeichnung beispielsweise näher erläutert. Es zeigen

Figur 1 die auseinandergezogene schaubildliche Darstellung eines Ausführungsbeispieles der erfindungsgemässen Anschlussvorrichtung,

Figur 2 einen Schnitt durch ein Anschlusselement der Anschlussvorrichtung, entlang der Linie II-II der Fig. 1,

Figur 3 einen ähnlichen Schnitt wie die Fig. 2 durch das Anschlusselement entlang der leicht versetzten Linie III-III der Fig. 1,

Figur 4 einen Schnitt durch ein Trennkontaktelement der Anschlussvorrichtung, entlang der Linie IV-IV der Fig. 1,

Figur 5 einen ähnlichen Schnitt durch das Trennkontaktelement wie die Fig. 4 entlang der leicht versetzten Linie V-V der Fig. 1,

Figur 6 einen Schnitt durch das Anschlusselement, in dem das Trennkontaktelement teilweise eingefügt ist, in der Schnittebene, die den Fig. 2 und 4 entspricht,

Figur 7 einen Schnitt durch das Anschlusselement, in das das Trennkontaktelement teilweise eingefügt ist, in der Schnittebene, die den Fig. 3 und 5 entspricht,

Figur 8 einen Schnitt durch ein Sicherungselement der Anschlussvorrichtung entlang der Linie VIII-VIII der Fig. 1,

Figur 9 die gleich Darstellungsart wie die Fig. 6, wobei jedoch ein Prüfstecker in das Trennkontaktelement eingesetzt ist,

Figur 10 die schaubildliche Darstellung eines Verbindungsgliedes, von denen eine Anzahl in dem Anschlusselement untergebracht ist,

Figur 11 die schaubildliche Darstellung eines Kontaktgliedes, von dem eine Anzahl im Trennkontaktelement untergebracht ist und

Figur 12 die Draufsicht auf einen Endbereich eines Verbindungsgliedes in einem grösseren Massstab dargestellt.

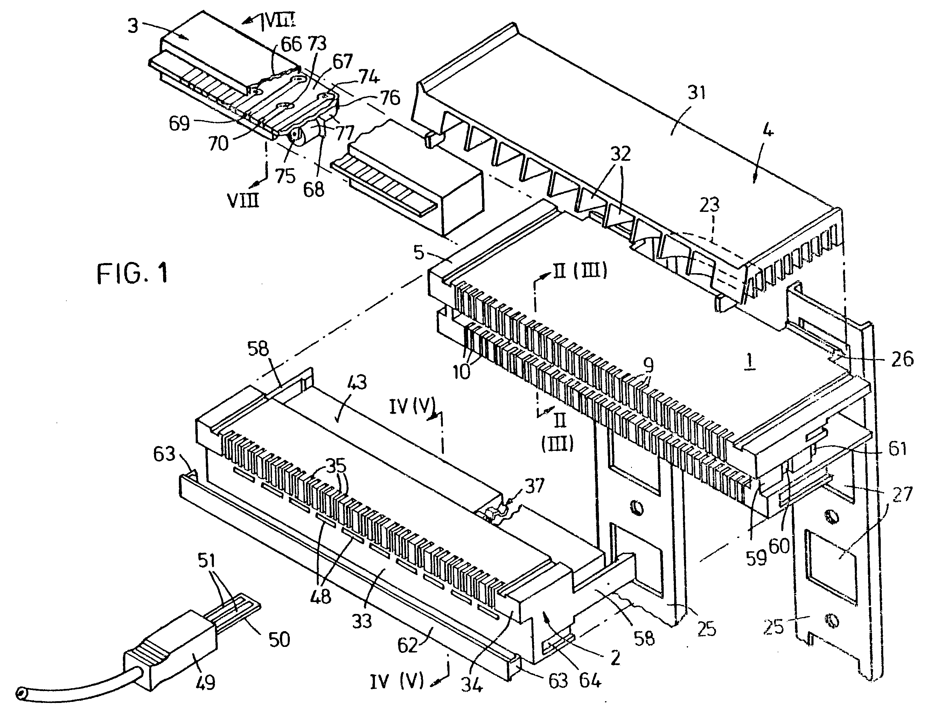

Die Fig. 1 zeigt die auseinandergezogene schaubildliche Darstellung eines bevorzugten Ausführungsbeispieles der erfindungsgemässen Anschlussvorrichtung. Diese umfasst ein Anschlusselement 1, ein von der Frontseite her teilweise in das Anschlusselement 1 einsetzbares Trennkontaktelement 2, ein seitlich oder von der Rückseite her in das Anschlusselement 1 einschiebbares Sicherungselement 3 und ein auf das Anschlusselement 1 aufsetzbares Drahtführungselement 4.

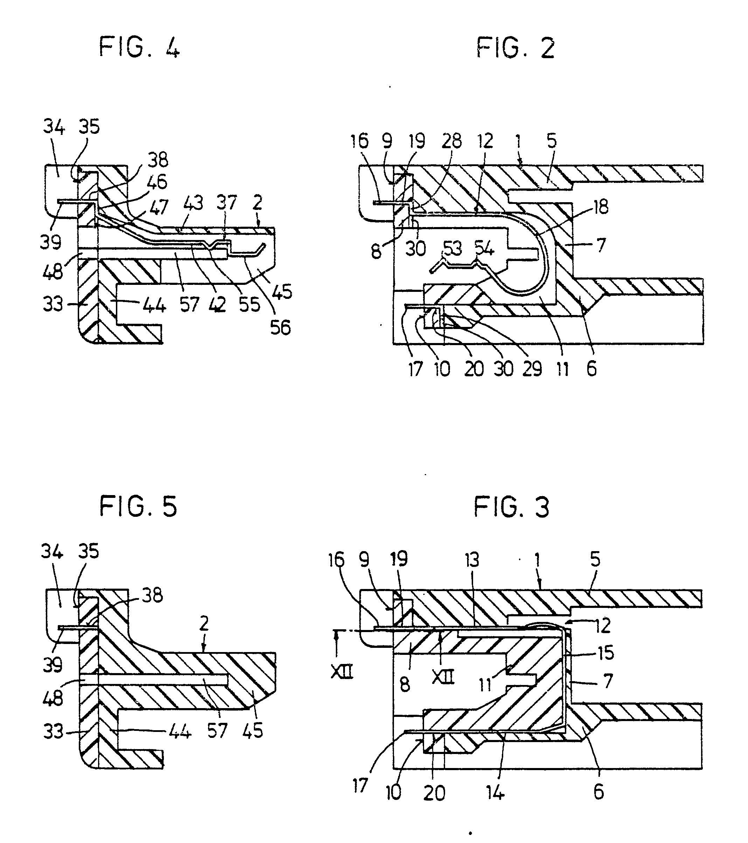

Es sei erwähnt, dass das einfachste Ausführungsbeispiel der erfindungsgemässen Anschlussvorrichtung das Anschlusselement 1 und das Trennkontaktelement 2 enthält. In den Fig. 2 und 3 ist je ein Schnitt durch das Anschlusselement 1 entlang der Linie II-II bzw. III-III der Fig. 1 dargestellt. Die beiden Schnittebenen verlaufen parallel zueinander und weisen etwa einen Abstand von 1 mm auf. Das Anschlusselement 1 besitzt bezogen auf die Fig. 2 und 3 eine obere Wand 5 und eine untere Wand 6, die sich über die ganze Länge des Anschlusselementes 1 erstrecken. Die Wände 5 und 6 werden durch eine senkrecht zu diesen Wänden angeordnete Zwischenwand 7 auf Abstand gehalten. Das Anschlusselement 1 enthält weiter ein Einsatzstück 8, das sich über die ganze Länge des Anschlusselementes 1 erstreckt und teilweise in den von einem Teil der oberen und unteren Wände 5 und 6 sowie der Zwischenwand 7 begrenzten Raum eingesetzt ist. In der Frontseite des Einsatzstückes 8 sind quer zur Längsrichtung des Anschlusselementes 1 verlaufende Nuten 9 bzw. 10 zur Aufnahme von nicht dargestellten, isolierten Leitungsadern eingelassen. Das Einsatzstück 8 weist eine Anzahl quer zu seiner Längsrichtung verlaufende Trennwände 11 auf.

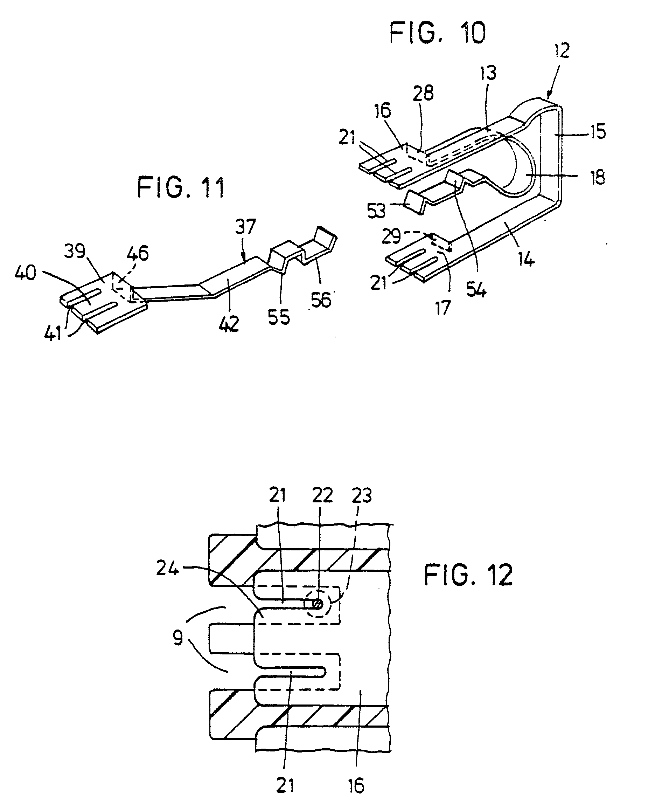

Im Anschlusselement 1 sind eine Anzahl im wesentlichen U-förmige Verbindungsglieder 12 nebeneinander angeordnet. Ein solches Verbindungsglied 12 ist in der Fig. 10 schaubildlich dargestellt. Der U-förmige Teil des Verbindungsgliedes 12 umfasst zwei Schenkel 13 und 14, die über einen Steg 15 miteinander verbunden sind. An den oberen Schenkel 13 schliesst sich ein verbreiteter Endbereich 16 und an den unteren Schenkel 14 ein verbreiteter Endbereich 17 an. Vom oberen Endbereich 16 aus erstreckt sich eine mehrfach gebogene Kontaktzunge 18, wobei sich die Kontaktzunge 18 zwischen den beiden Ebenen, in denen die Endbereiche 16 und 17 liegen, und dicht neben den oben genannten U-förmigen Teil befindet.

Die Schnittebene der Fig. 2 verläuft durch die Kontaktzunge 18 und der Schnitt der Fig. 3 durch den U-förmigen Teil des Verbindungsgliedes 12. Der Endbereich 16 erstreckt sich durch einen Durchbruch 19 im Einsatzstück 8 in die Nut 9 und der Endbereich 17 durch einen Durchbruch 20 des Einsatzstückes 8 in die Nut 10. Die Fig. 12 ist ein Teilschnitt entlang der Linie XII-XII der Fig. 3 und zeigt den Endbereich 16 des Verbindungsgliedes 12 in einem grösseren Massstab. Im Endbereich 16 sind zwei Schlitze 21 zur Aufnahme je eines Drahtes 22 einer der Leitungsadern und zum Durchtrennen der Isolation 23 der Leitungsadern vorgesehen. Die Breite der Schlitze 21 ist etwas kleiner als der Durchmesser des Drahtes 22, damit dieser beim Einpressen der Leitungsader leicht angeschnitten wird und somit einen guten elektrischen Kontakt gewährleistet. Selbstverständlich weist der andere Endbereich 17 ebenfalls zwei Schlitze 21 auf. Die Randzone der Endbereiche 16 und 17 sowie ein Lappen 24 zwischen den Schlitzen 21 befinden sich teilweise in Aussparungen in den die Nuten 9 und 10 begrenzenden Wandteilen. Somit sind die Endbereiche 16 und 17 gegen Zugbeanspruchungen, die durch die eingesetzten Leitungsadern auf die Schlitze 21 einwirken, besser geschützt. Das Verbindungsglied 12 wird vorzugsweise aus einem einzigen gestreckten Metallstreifen aus einem gut leitenden und federnden Metall, hergestellt, indem die Schlitze 21 aus den Endbereichen 16 und 17 ausgestanzt werden und der Teil des Metallstreifens zwischen den Endbereichen 16 und 17 längs der Mittellinie zur Bildung der Kontaktzunge 18 aufgetrennt wird. Anschliessend werden die Kontaktzunge 18 und die Schenkel 13 und 14 sowie der Steg 15 des Verbindungsgliedes 12 entsprechend gebogen.

Damit das Anschlusselement 1 an in der Fig. 1 gezeigten Tragschienen 25 befestigt werden kann, weisen die obere und untere Wand 5 und 6 je zwei auf der Rückseite vorstehende Ansätze 26 auf, die im Querschnitt gesehen hakenförmig ausgebildet sind. Diese Ansätze 26 sind nur in den Fig. 1, 6 und 9 dargestellt. Die hakenförmigen Ansätze 26 der oberen Wand 5 sind nach oben und die hakenförmigen Ansätze 26 der unteren Wand sind nach unten gerichtet, so dass je zwei gegenüberliegende Ansätze 26 in eine von vielen rechteckförmigen Aussparungen 27 in den Tragschienen 25 einschnappen können.

Wie oben erwähnt, umfasst das Anschlusselement 1 die beiden durch die Zwischenwand 7 auf Abstand gehaltenen Wände 5 und 6 und das Einsatzstück 8. Bei der Montage des Anschlusselementes 1 werden die Endbereiche 16 und 17 der Verbindungsglieder 12 von der Stirnseite her durch die Durchbrüche 19 bzw. 20 des Einsatzstückes 8 gesteckt, so dass ein rechtwinklig abgebogenes Teilstück 28 der Kontaktzunge 18 und ein rechtwinklig vom Endbereich 17 abstehender Lappen 29 auf der Rückseite des Einsatzstückes 8 anliegen. Anschliessend wird das Einsatzstück 8 mit den Verbindungsgliedern 12 von der Frontseite her zwischen die Wände 5 und 6 eingeschoben, bis das Einsatzstück 8 an den vorderen Stirnseiten der Wände 5 und 6 anliegt. Das Teilstück 28 und der Lappen 29 befinden sich in Nuten 30 auf der Rückseite des Einsatzstückes 8. Im zusammengesetzten Zustand des Anschlusselementes 1 werden das Teilstück 28 und der Lappen 29 durch die frontseitigen Stirnseiten der Wände 5 und 6 in den Nuten gehalten, so dass das Verbindungsglied 12 sich bezogen auf die Fig. 2 nicht nach links oder rechts bewegen kann. Das Einsatzstück 8 und die Wände 5 und 6 können durch Klebstoff fest miteinander verbunden sein. Vorzugsweise sind sie jedoch mit nicht dargestellten Mitteln, z. B. Schrauben oder Schnepper, lösbar miteinander verbunden, so dass defekte Verbindungsglieder mühelos ersetzt werden können.

Wie aus der Fig. 1 ersichtlich, kann auf die obere Wand 5 des Anschlusselementes 1 das Drahtführungselement 4 aufgesetzt werden. Das Drahtführungselement 4 besitzt eine Deckplatte 31 auf deren Unterseite eine Anzahl teilweise gebogene Führungswände 32 vorhanden sind, die zusammen mit der oberen Wand 5 des Anschlusselementes 1 Führungskanäle für die nicht dargestellten isolierten Leitungsadern bilden. Diese Leitungsadern werden in einem Bündel an die Schmalseite des Anschlusselementes 1 herangeführt, dann in die Führungskanäle aufgeteilt und durch diese geordnet den entsprechenden Nuten 9 zugeführt.

Ein Querschnitt durch das Trennkontaktelement 2 ist in den Fig. 4 und 5 gezeigt, wobei die Schnittebenen den Schnittebenen gemäss den Fig. 2 und 3 entsprechen. Das Trennkontaktelement 2 besitzt eine Frontplatte 33, deren oberer Randbereich bezogen auf die Fig. 1, 4 und 5 verdickt ist und einen nach aussen abstehenden Vorsprung 34 bildet. In dem Vorsprung 34 befinden sich quer zur Längsrichtung des Trennkontaktelementes 2 erstreckende Nuten 35 zur Aufnahme je einer nicht dargestellten isolierten Leitungsader. Durch einen Durchbruch 38 in der Frontwand 33 erstreckt sich ein Endbereich 39 eines Kontaktgliedes 37. Ein Teil des Endbereiches 39 ragt in die Nut 35. Eines der Kontaktglieder 37 ist in der Fig. 11 schaubildlich dargestellt. Der Endbereich 39 des Kontaktgliedes 37 ist ähnlich ausgebildet wie die Endbereiche 16 und 17 des Verbindungsgliedes 12 und weist ebenfalls zwei Schlitze 41 zur Aufnahme wenigstens eines Drahtes der nicht dargestellten Leiterader auf. Die Randzonen des Endbereiches 39 und der Lappen 40 zwischen den Schlitzen 41 befinden sich, ähnlich wie dies mit Bezug auf die Fig. 12 beschrieben ist, in Aussparungen in den die Nuten 35 begrenzenden Wandteilen, um den Endbereich 39 gegen Zug zu sichern.

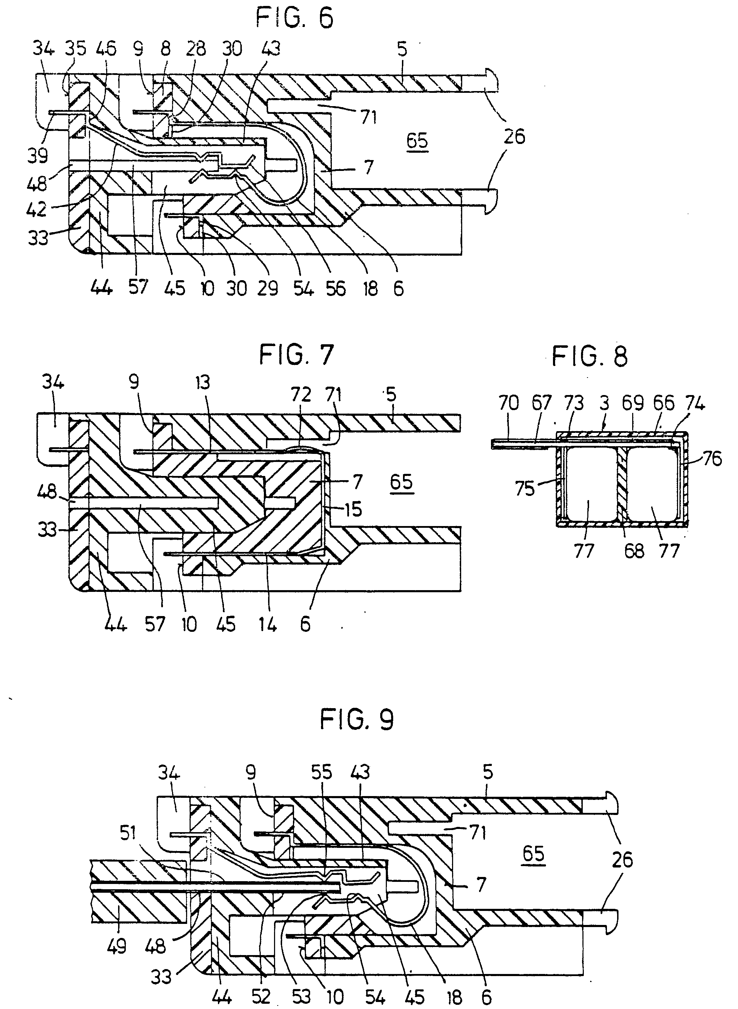

Der über die Rückseite der Frontplatte 33 vorstehende Teil 42 des Kontaktgliedes 37 ist mehrfach gebogen und zum Zusammenwirken mit einer der Kontaktzungen 18 des Anschlusselementes 1 bestimmt, wenn, wie in der Fig. 6 gezeigt, ein Teil des Trennkontaktelementes in das Anschlusselement 1 eingesetzt ist. Zum Schutz des aus der Rückseite der Frontplatte 33 herausragenden Teiles 42 der nebeneinander angeordneten Kontaktglieder 37 ist eine aus einer Deckwand 43, einer Bodenleiste 44 und Zwischenwänden 45 bestehende Abdeckhaube vorgesehen. Die Deckwand 43 und die im Querschnitt betrachtet U-förmige Bodenleiste 44 erstrecken sich über die ganze Länge des Trennkontaktelementes 2. In der Fig. 4 ist die Zwischenwand 45 in der Ansicht und in der Fig. 5 im Schnitt gezeichnet.

Beim Zusammenbauen des Trennkontaktelementes 2 wird der Endbereich 39 der Kontaktglieder 37 von der Rückseite der Frontplatte 33 her durch den Durchbruch 38 gesteckt, so dass ein an den Endbereich 39 anschliessender abgewinkelter Teil 46 des Kontaktgliedes 37 in einer Nut 47 auf der Rückseite der Frontplatte 33 liegt. Danach wird die oben beschriebene Schutzhaube auf die Rückseite der Frontplatte 33 aufgesetzt und mit dieser beispielsweise mit Klebstoff verbunden. Vorzugsweise wird die Abdeckhaube mit nicht dargestellten Mitteln lösbar an der Frontplatte 33 befestigt, damit allfällig beschädigte Kontaktglieder 37 auf einfache Weise ersetzt werden können.

In der Frontplatte 33 des Trennkontaktelementes 2 sind rechteckige Oeffnungen 48 zum Einschieben eines Prüfsteckers 49, siehe Fig. 1 und 9, vorhanden. Der Steckerteil 50 der Prüfsteckers 49 ist eine Platte aus einem elektrisch isolierenden Material. Auf der oberen Seite des Steckerteiles 50 sind zwei Leiterbahnen 51 und auf der unteren Seite sind zwei Leiterbahnen 52 angebracht, von denen in der Fig. 1 nur eine sichtbar ist.

Die Enden der Kontaktzunge 18 des Verbindungsgliedes 12 und des Kontaktgliedes 37 sind bezogen auf die Verschiebebewegungsrichtung des Trennkontaktelementes 2 beim Einsetzen in das Anschlusselement 1 schräg gerichtet, so dass beim Uebereinanderschieben dieser Enden das freie Ende der Kontaktzunge 18 bezogen auf die Fig. 6 unterhalb des freien Endes des Kontaktgliedes 37 gelangt. Der Endteil der Kontaktzunge 18 besitzt zwei nach oben gerichtete Ausbuchtungen 53 und 54. Der Endteil des Kontaktgliedes 37 weist zwei nach unten gerichtete Ausbuchtungen 55 und 56 auf. Wenn das Trennkontaktelement 2 in das Anschlusselement 1 eingesetzt ist, liegt die Ausbuchtung 54 der Kontaktzunge 18 an der Ausbuchtung 56 des Kontaktgliedes 37 an, so dass die Endbereiche 16 und 17 des Verbindungsgliedes 12 elektrisch mit dem Endbereich 39 des Kontaktgliedes 37 verbunden sind. Die Ausbuchtung 56 ist so tief, dass, wenn sich die Ausbuchtungen 54 und 56 berühren, zwischen den Ausbuchtungen 53 und 55 ein Luftspalt verbleibt.

Wird nun der Steckerteil 50 des Prüfsteckers 49 durch die Oeffnung 48 und einen Schlitz 57 in der Zwischenwand 45 in das Trennkontaktelement 2 eingeführt, so trifft das freie Ende des Steckerteiles 50 auf die Ausbuchtungen 53 und 55 der Kontaktzunge 18 bzw. des Kontaktgliedes 37 auf und spreizt die Kontaktzunge 18 und das Kontaktglied 37 auseinander, wodurch der elektrische Kontakt zwischen den Ausbuchtungen 54 und 56 unterbrochen wird. Gleichzeitig berührt die Ausbuchtung 53 der Kontaktzunge 18 die Leiterbahn 52 des Steckerteiles 50 und die Ausbuchtung 55 des Kontaktgliedes 37 die Leiterbahn 51 des Steckerteiles 50, siehe Fig. 9. Die Einschiebebewegung des Steckerteiles 50 wird durch das Ende des Schlitzes 57 in der Zwischenwand 45 gestoppt. Damit ist die Gefahr des Beschädigung der Kontaktzunge 18 und des Kontaktgliedes 37 weitgehend vermieden.

Durch diese Anordnung wird erreicht, dass der Steckerteil 50 nur bis zu den Ausbuchtungen 53 und 55 eindringt und dass daher durch den Prüfstecker 49 die Kontaktflächen an den Ausbuchtungen 54 und 56 nicht verschmutzt werden können. Somit ist im Normalzustand, d. h. wenn sich kein Stecker in dem Trennkontaktelement befindet, ein guter elektrischer Kontakt zwischen der Kontaktzunge 18 und dem Kontaktglied 37 gewährleistet.

Selbstverständlich ist eine einfachere Ausführungsform möglich, bei welcher die Kontaktzunge 18 und das Kontaktglied 37 nur je eine Ausbuchtung aufweisen, welche normalerweise aneinander anliegen und bei eingeführtem Prüfstecker 49 an den Leiterbahnen 51 bzw. 52 anliegen. Bei dieser einfachen Ausführung ist jedoch die Verschmutzungsgefahr grösser.

Das Trennkontaktelement 2 weist an seinen seitlichen Endwänden lediglich in der Fig. 1 sichtbare, nach hinten vorstehende Verlängerungen 58 auf, die an ihren freien Enden hakenförmig ausgebildet sind. In den seitlichen Endwänden des Anschlusselementes 1 ist je eine quer zur Längsrichtung verlaufende Nut 59 zur Aufnahme der zugehörigen Verlängerung 58 des Trennkontaktelementes 2 vorhanden. Im Boden der Nut 59 sind eine erste Vertiefung 60 und eine zweite Vertiefung 61 vorgesehen. Das hakenförmige Ende der Verlängerungen 58 greifen in die zweite Vertiefung 61 ein, wenn das Trennkontaktelement 2 bis zum Anschlag in das Anschlusselement 1 eingeschoben ist, wie dies in den Fig. 6, 7 und 9 dargestellt ist. Wenn die hakenförmigen Enden der Verlängerungen 58 in die ersten Vertiefungen 60 eingreifen, so befindet sich das Trennkontaktelement 2 bezüglich dem Anschlusselement 1 in einer Zwischenstellung, in welcher das Kontaktglied 37 und die Kontaktzunge 18 sich nicht berühren, d. h. in dieser Stellung ist die elektrische Verbindung zwischen den Endbereichen 16 und 17 des Verbindungsgliedes 12 und dem Endbereich 39 des Kontaktgliedes 37 unterbrochen.

Auf die Frontplatte 33 des Trennkontaktelementes 2 kann ein Bezeichnungsstreifenhalter 62 aufgesetzt werden. Dieser besitzt an seinen Enden je einen hakenförmigen Ansatz 63. Diese hakenförmigen Ansätze 63 greifen in Nuten 64 ein, von denen je eine in jeder seitlichen Endwand des Trennkontaktelementes 2 angeordnet ist.

Die obere Wand 5, die untere Wand 6 und die Zwischenwand 7 des Anschlusselementes 1 bilden zusammen einen Aufnahmeraum 65 für das Sicherungselement 3. Das Sicherungselement 3 ist in der Fig. 1 schaubildlich und aufgebrochen dargestellt und in der Fig. 8 im Querschnitt gezeichnet. In einem quaderförmigen Gehäuse 66 befindet sich eine Montageplatte 67, die teilweise aus dem Gehäuse 66 herausragt. In der Mitte des Gehäuses 66 und längs desselben erstreckt sich eine Erdschiene 68, die auf nicht dargestellte Weise an einem Ende des Gehäuses 66 herausragt und zum Verbinden mit einem nicht dargestellten Erdleiter bestimmt ist. Auf der Montageplatte 67 sind in regelmässigen Abständen Leiterbahnen 69 bzw. 70 angeordnet. Diese Leiterbahnen erstrecken sich ausgehend von einer Verbindungsstelle 73 bzw. 74 aus quer über die obere Seite der Montageplatte 67 und auf der Unterseite der Montageplatte 67 ein Stück zurück, siehe Fig. 8. Das auf der Unterseite der Montageplatte 67 befindliche Teilstück der Leiterbahnen 69 und 70 dient zur Kontaktgabe mit einer Ausbuchtung 72 des oberen Schenkels 13 des Verbindungsgliedes 12, wenn das Sicherungselement 3 in den Aufnahmeraum 65 des Anschlusselementes 1 eingesetzt ist. In den Zwischenwänden 7 des Anschlusselementes 1 sind Ausnehmungen 71 zur Aufnahme des über das Gehäuse 66 vorstehenden Teiles der Montageplatte 67 vorhanden. Das Sicherungselement 3 kann sowohl von der Rückseite des Anschlusselementes 1 als auch von der Seite her in das Anschlusselement 1 eingeschoben werden.

An jeder Verbindungsstelle 73 bzw. 74 ist je eine Niete vorgesehen, die die Montageplatte 67 durchdringt und auf der Unterseite der Montageplatte 67 ein Federelement 75 bzw. 76 festhält und dieses Federelement elektrisch mit der zugehörigen Leiterbahn 69 bzw. 70 verbindet. Diese beiden Federelemente 75 und 76 erstrecken sich im wesentlichen entlang einer ihnen benachbarten Wand des Gehäuses 66. Zwischen jedem Federelement 75 bzw. 76 und der Erdschiene 68 ist eine Ueberspannungssicherungspatrone 77 eingesetzt, so dass jedes Verbindungsglied 12 des Anschlusselementes 1 und damit jede in einem der Schlitze 21 der Endbereiche 16 bzw. 17 eingesetzte Leitungsader durch eine der Ueberspannungssicherungspatronen 77 gegen Ueberspannung geschützt werden kann.

Beim Aufbau des Sicherungselementes 3 wurde insbesondere darauf geachtet, dass die Verbindung des einen Anschlusses der Sicherungspatronen 77 mit der genannten, jedoch nicht dargestellten Erdleitung impedanzarm ist.

Die oben beschriebene Anschlussvorrichtung, die mit dem Trennkontaktelement 2 ausgerüstet ist, ermöglicht, dass mittels des Prüfsteckers 49 problemlos Messungen und Kontrollen an den Stromkreisen durchgeführt werden können und erleichtert in grossem Ausmass die Umschaltarbeit, wenn alte Ausrüstungen durch neue ersetzt werden müssen.

Das Trennkontaktelement kann auch als vielpoliger Messstecker verwendet werden.

Im einfachsten Fall der Verbindungsdurchschaltung, wo keine Auftrennung notwendig ist, kann vorerst nur das Anschlusselement 1 verwendet werden. Bei Verbindungen, wo eine Auftrennung oder ein Prüfzugriff erwünscht ist, wird das Anschlusselement mit dem Trennkontaktelement ergänzt. Damit wird erreicht, dass die beschriebene Anschlussvorrichtung in den verschiedensten Anwendungsgebieten eingesetzt werden kann.

**Patentansprüche**

1. Anschlussvorrichtung zum lötfreien Verbinden von elektrisch isolierten Leitungsadern, mit einem eine Anzahl von in einer Reihe nebeneinander angeordneten Verbindungsglieder (12) aufweisenden Anschlusselement (1), welche Verbindungsglieder in jedem Endbereich wenigstens einen Schlitz (21) zum Durchtrennen der Isolation einer der Leitungsadern und zur elektrischen Kontaktgabe mit dem Draht der Leitungsader aufweisen, wobei jedes Verbindungsglied eine federnde Kontaktzunge (18) aufweist und mit einem steckbaren Bauteil, dadurch gekennzeichnet, dass die Verbindungsglieder (12) U-förmig ausgebildet sind, dass die beiden mit dem Schlitz (21) versehenen Endbereiche (16, 17) des Verbindungsgliedes in zwei wenigstens angenähert parallelen Ebenen liegen und von der gleichen Seite her zugänglich sind, wobei jedes Verbindungsglied (12) eine im wesentlichen U-förmige, federnde Kontaktzunge (18) besitzt, dass sich das mit wenigstens einer Kontaktfläche (54) versehene freie Ende der Kontaktzunge (18) in der gleichen Richtung erstreckt, wie die Endbereiche (16, 17) der Verbindungsglieder (12), dass das genannte steckbare Bauteil als ein teilweise in eine Aussparung im Anschlusselement (1) einführbares Trennkontaktelement (2) ausgebildet ist, das eine Frontplatte (33) mit einem längs eines Randbereiches verlaufenden Vorsprung (34) und eine Anzahl Kontaktglieder (37) enthält, dass jedes Kontaktglied (37) einen Endbereich (39) mit wenigstens einem Schlitz (41) zum Durchtrennen der Isolation einer der Leitungsadern und zur elektrischen Kontaktgabe mit dem Draht der Leitungsader besitzt, dass sich der genannte Endbereich (39) durch einen Durchbruch (38) in der Frontplatte erstreckt, dass das freie Ende (42) des zum Zusammenwirken mit einer der Kontaktzungen (18) des Anschlusselementes (1) bestimmten Kontaktgliedes (37) nach der von der Frontplatte wegweisenden Seite absteht, und dass die über die Kontaktzunge (18) und das Kontaktglied (37) gebildete elektrische Verbindung zwischen den Endbereichen (16, 17) des Verbindungsgliedes (12) und dem Endbereich (39) des Kontaktgliedes (37) mittels eines Prüfsteckers (49) auftrennbar ist.

2. Vorrichtung nach Anspruch 1, dadurch gekennzeichnet, dass das Anschlusselement (1) eine erste (5) und eine zweite (6) Wand aufweist, welche Wände sich über die ganze Länge des Anschlusselementes erstrecken und durch eine sich über die ganze Länge der Wände erstreckende Zwischenwand (7) auf Abstand gehalten sind, dass die erste, die zweite Wand und die Zwischenwand die Aussparung zum Aufnehmen eines Teiles des Trennkontaktelementes (2) begrenzen, dass zwischen je zwei benachbarten Verbindungsgliedern (12) je eine quer zur Längsrichtung der Wand verlaufende Trennwand (11) vorhanden ist, und dass im Bereich der schmalen Längsseiten der erstgenannten Wände quer zur Längsrichtung der beiden Wände verlaufende Nuten (9, 10) zum Aufnehmen der isolierten Leitungsadern vorhanden sind.

3. Vorrichtung nach Anspruch 2, dadurch gekennzeichnet, dass das Anschlusselement zwei Teile aus schlagfestem Kunststoff umfasst, dass der eine Teil aus der ersten und zweiten Wand (5, 6) und der Zwischenwand (7) besteht, dass der andere Teil ein zwischen den genannten Wänden vorzugsweise lösbar eingesetztes Einsatzstück (8) ist, das die Trennwände (11) und die genannten Nuten (9, 10) aufweist, dass im Einsatzstück eine Anzahl Durchbrüche (19, 20) vorhanden sind, von welchen je einer in eine der Nuten mündet und dass sich durch jeden Durchbruch je einer der Endbereiche (16, 17) in eine der Nuten erstreckt.

4. Vorrichtung nach Anspruch 2 oder 3, mit Drahtführungskanälen, dadurch gekennzeichnet, dass ein auf die erste Wand (5) aufsetzbares Drahtführungselement (4) vorhanden ist, dass das Drahtführungselement (4) eine Deckplatte (31) aufweist und dass auf der Unterseite der Deckplatte zum Bilden der Führungskanäle für die isolierten Leitungsadern eine Anzahl teilweise gebogene Führungswände (32) angeordnet sind.

5. Vorrichtung nach Anspruch 1, dadurch gekennzeichnet, dass im Vorsprung (34) des Trennkontaktelementes (2) quer zur Längsrichtung der Frontplatte verlaufende Nuten (35) zur Aufnahme je einer der Leitungsadern vorhanden sind dass das Trennkontaktelement (2) zum Schutz der von der Rückseite der Frontplatte abstehenden Teile (42) der Kontaktglieder (37) eine Deckwand (43) und eine Leiste (44) umfasst, dass die Deckwand und die Leiste über eine Anzahl quer zur Längsrichtung des Trennkontaktelementes verlaufende Zwischenwände (45) auf Abstand gehalten sind, dass in der Frontplatte (33) in einer Reihe angeordnete Oeffnungen (48) zum Einführen eines Prüfsteckers vorhanden sind und dass in jeder Zwischenwand (45) ein Schlitz (57) zum Führen des Prüfsteckers vorhanden ist.

6. Vorrichtung nach Anspruch 5, dadurch gekennzeichnet, dass der freie Endbereich der Kontaktzunge (18) zwei Ausbuchtungen (53, 54) und der freie Endbereich des Kontaktgliedes (37) zwei Ausbuchtungen (55, 56) aufweist, dass bei in das Anschusselement (1) eingesetztem Trennkontaktelement (2) sich die genannten freien Endbereiche überlappen, dass die weiter von der Frontplatte (33) entfernten Ausbuchtungen (54, 56) der Kontaktzunge (18) und des Kontaktgliedes (37) zum Herstellen einer elektrischen Verbindung zwischen den Endbereichen (16, 17) des Verbindungsgliedes (12) und dem Endbereich (39) des Kontaktgliedes (37) aneinander anliegen und dass zwischen den sich näher bei der Frontplatte befindlichen Ausbuchtungen (53, 55) oder der Kontaktzunge und des Kontaktgliedes ein Abstand vorhanden ist, und dass bei eingeführtem Prüfstecker die sich näher bei der Frontplatte befindlichen Ausbuchtungen (53, 55) an Kontaktflächen (51, 52) des Prüfsteckers anliegen und zwischen den weiter von der Frontplatte entfernten Ausbuchtungen (54, 56) ein Abstand vorhanden ist.

7. Vorrichtung nach einem der Ansprüche 1 bis 6, dadurch gekennzeichnet, dass das Verbindungsglied (12) mit der Kontaktzunge (18) aus einem Stück hergestellt ist, dass die Summe der Breite der Kontaktzunge (18) und der Breite des aus zwei Schenkeln (13, 14) und einem Verbindungssteg (15) bestehenden U-förmigen Teiles des Verbindungsgliedes gleich der Breite der Endbereiche (16, 17) des Verbindungsgliedes ist, und dass die Breite des von der Rückseite der Frontplatte (33) abstehenden Teiles (42) des Kontaktgliedes gleich der Breite der Kontaktzunge ist.

8. Vorrichtung nach einem der Ansprüche 1 bis 7, mit einem von der Rückseite oder seitlich in das Anschlusselement einschiebbares Sicherungselement, dadurch gekennzeichnet, dass das Sicherungselement (3) ein Gehäuse (66), eine teilweise aus dem Gehäuse herausragende Montageplatte (67) und eine das Gehäuse in der Längsrichtung in zwei Kammern aufteilende Erdschiene (68) umfasst, dass in den Kammern Ueberspannungssicherungspatronen (77) untergebracht sind, und dass bei in das Anschlusselement (1) eingesetztem Sicherungselement (3) der eine Anschlusskontakt jeder Ueberspannungssicherungspatrone elektrisch mit je einem der Verbindungsglieder (12) und der andere Abschlusskontakt mit der Erdschiene (68) verbunden sind.

9. Vorrichtung nach Anspruch 8, dadurch gekennzeichnet, dass die erste und zweite Wand (5, 6) des Anschlusselementes (1) zum Bilden eines Aufnahmeraumes (65) für das Sicherungselement (3) über die Zwischenwand (7) hinaus verlängert sind, dass in der Zwischenwand eine Ausnehmung (71) zum Aufnehmen des über das Gehäuse (66) des Sicherungselementes vorstehenden Teiles der Montageplatte (67) vorhanden ist und dass auf der Montageplatte (67) Leiterbahnen (69, 70) zum elektrischen Verbinden des einen Anschlusskontaktes der Ueberspannungssicherungspatronen (77) mit einer in die genannte Ausnehmung (71) ragenden Ausbuchtung (72) des einen Schenkels (13) des U-förmigen Teiles des Verbindungsgliedes (12) angebracht sind. ‾

**Claims**

1. Connecting device for the solderless connection of electrically insulated line conductors, having a connection element (1) with a number of connecting members (12) disposed next to one another in a row, which connecting members have in each end region at least one slot (21) for severing the insulation of one of the line conductors and for making electrical contact with the wire of the line conductor, each connecting member having a springy contact tongue (18), and having a pluggable component, characterized in that the connecting members (12) are U-shaped, that the two end regions (16, 17) of the connecting member provided with the slot (21) lie in two at least approximately parallel planes and are accessible from the same side, each connecting member (12) having a substantially U-shaped, springy contact tongue (18), that the free end of the contact tongue (18) provided with at least one contact surface (54) extends in the same direction as the end regions (16, 17) of the connecting members (12), that the said pluggable component is formed as a break-contact element (2) partially insertable in a recess in the connection element (1), which break-contact element contains a front panel (33) having a projection (34) running along an edge region and a number of contact members (37), that each contact member (37) has an end region (39) with at least one slot (41) for severing the insulation of one of the line conductors and for making electrical contact with the wire of the line conductor, that the said end region (39) extends through an opening (38) in the front panel, that the free end (42) of the contact member (37) intended to cooperate with one of the contact tongues (18) of the connection element (1) protrudes towards the side facing away from the front panel, and that the electrical connection formed via the contact tongue (18) and the contact member (37) between the end regions (16, 17) of the connecting member (12) and the end region (39) of the contact member (37) can be opened by means of a test plug (49).

2. Device according to claim 1, characterized in that the connection element (1) has a first (5) and a second (6) wall, which walls extend over the entire length of the connection element and are kept spaced by a partition (7) extending over the entire length of the walls, that the first wall, the second wall, and the partition bound the recess for receiving part of the break-contact element (2), that between each two adjacent connecting members (12) there is a respective dividing wall (11) running at right angles to the longitudinal direction of the wall, and that in the region of the narrow longitudinal sides of the first-mentioned walls there are grooves (9, 10) running at right angles to the longitudinal direction of the two walls for receiving the insulated line conductors.

3. Device according to claim 2, characterized in that the connection element comprises two parts of impact-resistant plastics, that the one part consists of the first and second walls (5, 6) and the partition (7), that the other part is an insert piece (8) inserted, preferably detachably, between the said walls, which insert piece includes the dividing walls (11) and the said grooves (9, 10), that there are a number of openings (19, 20) in the insert piece, each of which opens into one of the grooves, and that a respective one of the end regions (16, 17) extends through each opening into one of the grooves.

4. Device according to claim 2 or 3 having wire-guiding channels, characterized in that there is a wire-guiding element (4) seatable upon the first wall (5), that the wire-guiding element (4) has a cover plate (31), and that a number of partially bent guiding walls (32) are disposed on the underside of the cover plate for forming the guiding channels for the insulated line conductors.

5. Device according to claim 1, characterized in that in the projection (34) of the break-contact element (2) there are grooves (35) running at right angles to the longitudinal direction of the front panel for each receiving a respective one of the line conductors, that the break-contact element (2) comprises a cover wall (43) and a ledge (44) for protecting the parts (42) of the contact members (37) protruding from the back of the front panel, that the cover wall and the ledge are kept spaced via a number of partitions (45) running at right angles to the longitudinal direction of the break-contact element, that there are openings (48) disposed in a row in the front panel (33) for introducing a test plug, and that there is a slot (57) in each partition (45) for guiding the test plug.

6. Device according to claim 5, characterized in that the free end region of the contact tongue (18) has two bulges (53, 54) and the free end region of the contact member (37) has two bulges (55, 56), that when the break-contact element (2) is inserted into the connection element (1), the said free end regions overlap, that the bulges (54, 56) of the contact tongue (18) and of the contact member (37) farther removed from the front panel (33) rest against one another for establishing an electrical connection between the end regions (16, 17) of the connecting member (12) and the end region (39) of the contact member (37) and that there is a separation between the bulges (53, 55) of the contact tongue and of the contact member situated closer to the front panel, and that when the test plug is introduced, the bulges (53, 55) situated closer to the front panel rest against contact surfaces (51, 52) of the test plug and there is a separation between the bulges (54, 56) farther removed from the front panel.

7. Device according to one of the claims 1 to 6, characterized in that the connecting member (12) is made in one piece with the contact tongue (18), that the sum of the width of the contact tongue (18) and the width of the U-shaped part of the connecting member consisting of two legs (13, 14) and a connecting crosspiece (15) is equal to the width of the end regions (16, 17) of the connecting member, and that the width of the part (42) of the contact member protruding from the back of the front panel (33) is equal to the width of the contact tongue.

8. Device according to one of the claims 1 to 7 having a fuse element slidable into the connection element from the back or laterally, characterized in that the fuse element (3) comprises a housing (66), a mounting plate (67) projecting partially from the housing, and an earth bar (68) dividing the housing lengthwise into two chambers, that overvoltage cartridge fuse-links (77) are accommodated in the chambers, and that when the fuse element (3) is inserted in the connection element (1), the one connection contact of each overvoltage cartridge fuse-link is electrically connected to a respective one of the connecting members (12) and the other connection contact to the earth bar (68).

9. Device according to claim 8, characterized in that the first and second walls (5, 6) of the connection element (1) are extended beyond the partition (7) for forming a receiving space (65) for the fuse element (3), that there is a recess (71) in the partition for receiving the part of the mounting plate (67) projecting beyond the housing (66) of the fuse element, and that conductor paths (69, 70) are fixed to the mounting plate (67) for electrically connecting the one connection contact of the overvoltage cartridge fuse-link (77) to a bulge (72) of the one leg (13) of the U-shaped part of the connecting member (12) protruding into the said recess (71).

## Revendications

1. Dispositif de connexion pour interconnecter sans soudure des fils conducteurs électriques à isolation, comprenant un élément de connexion (1) ayant un nombre de membres connecteurs (12) disposés en une ligne l'un à côté de l'autre, lesquels membres connecteurs présentent, en chaque région d'extrémité, au moins une fente (21) pour enlever l'isolation d'un des fils conducteurs et pour établir un contact électrique avec l'âme conductrice du fil conducteur, chaque membre connecteur comportant une languette élastique de contact (18), et comprenant un composant enfichable, caractérisé en ce que les membres connecteurs (12) sont en forme de U, en ce que les deux régions d'extrémité (16, 17) du membre connecteur munies de la fente (21) se trouvent en deux plans au moins approximativement parallèles et sont accessibles depuis le même côté, chaque membre connecteur (12) comportant une languette de contact (18) substantiellement en forme de U, en ce que l'extrémité libre de la languette de contact (18), munie d'au moins une surface de contact (54), s'étend dans la même direction que les régions d'extrémité (16, 17) des membres connecteurs (12), en ce que ledit composant enfichable est formé d'un élément de contact séparable (2) partiellement insérable dans un retrait de l'élément de connexion (1), lequel élément de contact séparable contient une plaque frontale (33) ayant une projection (34) s'étendant le long d'une région marginale et un nombre de membres de contact (37), en ce que chaque membre de contact (37) comporte une région d'extrémité (39) munie d'au moins une fente (41) pour enlever l'isolation de l'un des fils conducteurs et pour établir un contact électrique avec l'âme conductrice de ce fil conducteur, en ce que ladite région d'extrémité (39) s'étend à travers une ouverture (38) dans la plaque frontale, en ce que l'extrémité libre (42) du membre de contact (37), destinée à coopérer avec une des languettes de contact (18) de l'élément de connexion (1), s'étend en direction du côté opposé de la plaque frontale, et en ce que la connexion électrique formée par l'intermédiaire de la languette de contact (18) et du membre de contact (37) entre les deux régions d'extrémité (16, 17) du membre connecteur (12) et la région d'extrémité (39) du membre de contact (37) peut être ouverte au moyen d'une fiche de test (49).

2. Dispositif selon la revendication 1, caractérisé en ce que l'élément de connexion (1) a une première paroi (5) et une seconde paroi (6), lesquelles parois s'étendent sur toute la longueur de l'élément de connexion et sont maintenues espacées par une paroi intermédiaire (7) s'étendant sur toute la longueur des parois, en ce que la première paroi, la seconde paroi, et la paroi intermédiaire délimitent le retrait pour recevoir une partie de l'élément de contact séparable (2), en ce que, chaque fois entre deux membres connecteurs (12) voisins, se trouve une paroi séparatrice (11) dirigée perpendiculairement à la direction longitudinale de la paroi, et en ce que, dans la région des côtés longitudinaux étroits des parois premièrement mentionnées, se trouvent des encoches (9, 10) dirigées perpendiculairement à la direction longitudinale des deux parois, pour recevoir les fils conducteurs isolés.

3. Dispositif selon la revendication 2, caractérisé en ce que l'élément de connexion comprend deux parties de matière synthétique résistante aux chocs, en ce qu'une de ces parties consiste en les première et seconde parois (5, 6) et la paroi intermédiaire (7), en ce que l'autre partie est une pièce d'insertion (8), insérée d'une façon préférablement amovible, entre lesdites parois, cette pièce d'insertion présentant les parois séparatrices (11) et lesdites encoches (9, 10), en ce qu'un nombre d'ouvertures (19, 20) sont établies dans la pièce d'insertion, chaque ouverture débouchant dans une des encoches, et en ce que, au travers de chacune des ouvertures, une des portions d'extrémité (16, 17) s'étend dans une des encoches.

4. Dispositif selon l'une des revendications 2 ou 3, comprenant des canaux de guidage de fils, caractérisé en ce qu'il comprend un élément de guidage de fil disposable sur la première paroi (5), en ce que l'élément de guidage de fil (4) présente une plaque-couvercle (31), et en ce qu'un nombre de parois de guidage partiellement repliées (32) sont disposées contre la face inférieure de la plaque-couvercle pour former les canaux de guidage pour les fils conducteurs isolés.

5. Dispositif selon la revendication 1, caractérisé en ce que, dans la projection (34) de l'élément de contact séparable (2), se trouvent des creusures (35), dirigées perpendiculairement à la direction longitudinale de la plaque frontale, chacune pour la réception d'un fil conducteur respectif, en ce que l'élément de contact séparable (2) comprend une paroi de couverture (43) et un listeau (44) pour protéger les parties (42) du membre de contact (37) qui s'étendent depuis l'arrière de la plaque frontale, en ce que la paroi de couverture et le listeau sont maintenus espacés par un nombre de parois intermédiaires (45) s'étendant perpendiculairement à la direction longitudinale de l'élément de contact séparable, en ce que des ouvertures (48) sont disposées en une ligne dans la plaque frontale (33) pour l'introduction d'une fiche de test, et en ce qu'une fente (57) est établie dans chaque paroi intermédiaire (45) pour guider la fiche de test.

6. Dispositif selon la revendication 5, caractérisé en ce que la région d'extrémité libre de la languette de contact (18) présente deux reliefs (53, 54) et que la région d'extrémité libre du membre de contact (37) présente deux reliefs (55, 56), en ce que, lorsque l'élément de contact séparable (2) est inséré dans l'élément de connexion (1), les deux dites régions d'extrémité se superposent, en ce que les reliefs (54, 56) de la languette de contact (18) et du membre de contact (37) les plus éloignés dans la plaque frontale (33) s'arrêtent en appui l'un contre l'autre pour établir la connexion électrique entre les régions d'extrémité (16, 17) du membre connecteur (12) et la région d'extrémité (39) du membre de contact (37) tandis qu'il existe une séparation entre les reliefs (53, 55) de la languette de contact et du membre de contact situés plus près de la plaque frontale, et en ce que, lorsque la fiche de test est introduite, les reliefs (53, 55) situés le plus près de la plaque frontale s'arrêtent en appui contre les surfaces de contact (51, 52) de la fiche de test, tandis qu'il existe une séparation entre les reliefs (54, 56) les plus éloignés de la plaque frontale.

7. Dispositif selon l'une des revendications 1 à 6, caractérisé en ce que le membre connecteur (12) est venu d'une pièce avec la languette de contact (18), en ce que la somme de la largeur de la languette de contact (18) et de la largeur de la partie en forme de U du membre de liaison, partie qui consiste en deux bras (13, 14) et une barrette de liaison (15), est égale à la largeur de la région d'extrémité (16, 17) du membre connecteur, et en ce que la largeur de la partie (42) du membre de contact qui dépasse le côté arrière de la plaque frontale (33) est égale à la largeur de la languette de contact.

8. Dispositif selon l'une des revendications 1 à 7, comprenant un élément de fusibles de sécurité pouvant être glissé dans l'élément de connexion depuis l'arrière ou latéralement, caractérisé en ce que l'élément à fusibles de sécurité (3) comprend un boîtier (66), une plaque de montage (67) se projetant partiellement depuis le boîtier, et une barre de terre (68) divisant le boîtier longitudinalement en deux chambres, en ce que des douilles de sécurité à l'égard des surtensions (77) sont disposées dans les chambres, et en ce que, lorsque l'élément fusible de sécurité (3) est inséré dans l'élément de connexion (1), l'une des connexions de contact de chaque douille de sécurité à l'égard des surtensions est électriquement connectée, respectivement avec un des membres connecteurs (12), l'autre connexion de contact étant électriquement reliée avec la barre de terre (68).

9. Dispositif selon la revendication 8, caractérisé en ce que les première et seconde parois (5, 6) de l'élément de connexion (1) sont en extension au-delà de la paroi intermédiaire (7) de façon à former un espace de réception (65) pour l'élément de sécurité (3), en ce qu'il existe dans la paroi intermédiaire un logement (71) pour recevoir une partie de la plaque de montage (67) qui se projette au-delà du boîtier (66) de l'élément de sécurité, et en ce que des chemins conducteurs (69, 70) sont établis sur la plaque de montage (67) pour connecter électriquement l'une des connexions de contact de la cartouche de sécurité à l'égard des surtensions (77) avec une protubérance (72) de l'un des bras (13) de la partie en forme de U de l'élément connecteur (12), laquelle protubérance (72) apparaît en relief dans ledit logement (71).

FIG. 1

0 073 740

FIG. 4

FIG. 2

FIG. 5

FIG. 3

## FIG. 6

## FIG. 7

## FIG. 8

## FIG. 9

FIG. 10

FIG. 11

FIG. 12